# FASCICULE DE BREVET EUROPEEN

(11) **EP 1 258 666 B1**
(45) Date de publication et mention de la délivrance du brevet: **19.12.2007**
(21) Numéro de dépôt: 02356091.5
(22) Date de dépôt: 14.05.2002
(51) Int. Cl.: F16L 33/22, F16L 37/092

(54) **Raccord instantané à fixation par bague élastique externe**
Schnellkupplung mit Befestigung durch elastischen, äusseren Ring
Quick connector with fastening by elastic external ring

(30) Priorité: 14.05.2001 FR 0106322
(43) Date de publication de la demande: 20.11.2002
(73) Titulaire: COMAP, 69008 Lyon (FR)
(72) Inventeur: Le Clinche, Pascal, 69008 Lyon (FR)
(74) Mandataire: Maureau, Philippe

(56) Documents cités:
- EP-A- 0 735 306
- EP-A- 0 940 620
- EP-A- 1 178 255
- US-A- 4 705 304

## Description

L'invention concerne un raccord instantané pour tubes déformables tels que des tubes composites comprenant une âme métallique, par exemple en aluminium, revêtue de couches en matière synthétique telle que du polyéthylène réticulé, utilisés pour la réalisation de réseaux de transport d'énergie ou de distribution de fluide comme par exemple des réseaux de chauffage central ou de distribution d'eau sanitaire.

Dans le domaine ci-dessus, il est connu d'utiliser des raccords, dits instantanés ou rapide, pour assembler ou raccorder les différents tronçons de tubes constitutifs du réseau.

Ainsi, il est connu de mettre en oeuvre un raccord qui présente, pour chaque tube à raccorder, une partie tubulaire femelle délimitant une chambre d'accrochage dans laquelle est engagée une bague d'accrochage présentant, sur sa face interne, une série d'arêtes destinées à pénétrer dans la surface extérieure du tube à raccorder. Le raccord comprend également, au fond de chaque chambre d'accrochage, un joint torique en amont duquel, dans le sens de l'introduction du tube, est disposée une rondelle d'appui.

Le raccordement s'effectue alors en engageant le tube dans la bague d'accrochage disposée dans la partie tubulaire femelle jusqu'à venir en appui sur la rondelle et appliquer ainsi le joint torique contre le fond de la chambre d'accrochage.

Il doit être noté que la surface de la chambre d'accrochage, orientée vers l'extrémité d'introduction de la partie tubulaire femelle, possède une forme tronconique convergeant vers l'extrémité d'introduction, de sorte que lorsque le tube est déplacé dans le sens d'un retrait, cette partie tronconique tend à serrer la bague d'accrochage sur la face extérieure du tube.

Un tel dispositif permet effectivement d'assurer le raccordement d'un tube. Toutefois, il présente, compte tenu de sa structure, des inconvénients qui peuvent apparaître rédhibitoires dans certaines utilisations.

Tout d'abord, l'étanchéité est assurée, sur ce type de raccord au niveau de l'extrémité du tube, de sorte qu'en cas de mouvement de ce dernier, le fluide transporté peut entrer en contact avec l'extrémité du tube. Or, cela peut être particulièrement gênant dans le cadre de l'utilisation de tubes en composites comprenant une âme métallique par exemple en aluminium revêtue de couches de matières synthétiques telles que du polyéthylène réticulé. En effet, ce contact entre l'âme en aluminium et le fluide transporté, comme par exemple de l'eau, peut entraîner une oxydation de l'âme et donc une détérioration du tube.

Par ailleurs, en cas de déplacement du tube, le joint torique, qui se trouve au fond de la chambre d'accrochage, n'est plus contraint et n'assure alors pas sa fonction d'étanchéité et il existe une risque de fuite.

Afin de remédier à ces problèmes d'étanchéité, conséquences d'une mauvaise immobilisation du joint, une demande de brevet européen EP-0 021 795 a proposé un raccord rapide dans lequel l'étanchéité est assurée par un joint torique venant s'adapter dans la chambre d'accrochage au niveau de la surface extérieure du tube et non pas en bout, comme cela était le cas pour l'exemple précédemment cité.

Ainsi, le raccord proposé par la demande EP-0 021 795 apporte une solution partielle aux problèmes d'étanchéité liés aux risques de déplacement du tube par rapport au raccord. Cependant, le raccord proposé par la demande EP-0 021 795 n'apporte aucune solution aux problèmes du risque de contact entre l'extrémité du tube et le fluide circulant dans ce dernier, contact pouvant être préjudiciable lorsque le tube possède une âme métallique par exemple.

Le document EP 0 735 306 décrit un raccord selon le préambule de la revendication 1.

Ainsi, il apparaît le besoin de disposer d'un nouveau type de raccord qui soit à même d'empêcher efficacement tout contact entre l'extrémité du tube et le fluide transporté dans ce dernier, et qui puisse être démonté, si nécessaire.

Afin d'atteindre cet objectif, l'invention concerne un raccord comprenant une âme métallique, par exemple en aluminium, revêtue de couches en matière synthétique, par exemple de polyéthylène réticulé, comprenant un corps rigide (1) pourvu, pour le raccordement de chaque tube, de moyens de raccordement (3) comprenant :
- une partie tubulaire (4) sur laquelle le tube à raccorder est destiné à être emmanché à partir d'une extrémité d'introduction (5) de la partie tubulaire et qui présente une gorge périphérique extérieure (6) pour le logement d'un joint (7) destiné à coopérer avec la face interne (8) du tube pour assurer l'étanchéité du raccordement,
- une bague d'accrochage (15), mobile axialement, dans laquelle le tube à raccorder est destiné à être engagé, qui présente sur sa face intérieure au moins une arête saillante d'accrochage (16) destinée à coopérer avec la face extérieure du tube et qui possède, au moins dans la région portant les moyens d'accrochage, une capacité de déformation élastique au moins dans le sens d'une augmentation de la section de passage de la bague,
- une coiffe tubulaire rigide (20) fixée à la partie tubulaire (4) délimitant une chambre annulaire (21), dite d'accrochage, à l'intérieur de laquelle est située la bague d'accrochage.

Selon l'invention, le raccord rapide est caractérisé en ce qu'il comprend une bague de démontage (37) mobile en translation axiale montée à demeure dans la coiffe et accessible, à partir de l'extrémité de la coiffe située du côté de l'extrémité d'introduction de la partie tubulaire pour être déplacée depuis une position de montage dans laquelle est située la bague de démontage, à distance de la bague d'accrochage, vers une position de démontage dans laquelle la bague de démontage agit sur la bague d'accrochage.

D'autres caractéristiques de l'invention ressortent des revendications secondaires.

La mise en oeuvre d'une partie tubulaire pouvant être qualifiée de mâle destinée à venir s'insérer à l'intérieur du tube, et pourvue d'un joint d'étanchéité coopérant avec la face intérieure du tube, permet de manière fort avantageuse d'empêcher tout contact entre le fluide circulant dans le tube et l'extrémité du tube emmanchée sur la partie tubulaire mâle.

Il doit être noté que la chambre d'accrochage est munie de moyens de limitation de la course de la bague d'accrochage, évitant que celle-ci puisse coopérer avec la bague de démontage et se détacher du tube lors d'un mouvement intempestif du tube dans le sens d'un retrait.

L'invention sera bien comprise à l'aide de la description qui suit, en référence au dessin schématique annexé représentant, à titre d'exemple non limitatif, une forme d'exécution de ce raccord.
Figure 1 en est une vue en perspective ;
Figure 2 en est une vue en coupe longitudinale ;
Figure 3 est une vue en perspective de la bague d'accrochage ;
Figure 4 est une vue en perspective de la bague de déverrouillage ;
Figure 5 est une vue en perspective accrochée de l'intérieur de la coiffe tubulaire ;
Figure 6 est une vue en coupe longitudinale de la coiffe tubulaire équipée de la bague d'accrochage et de la bague de déverrouillage.

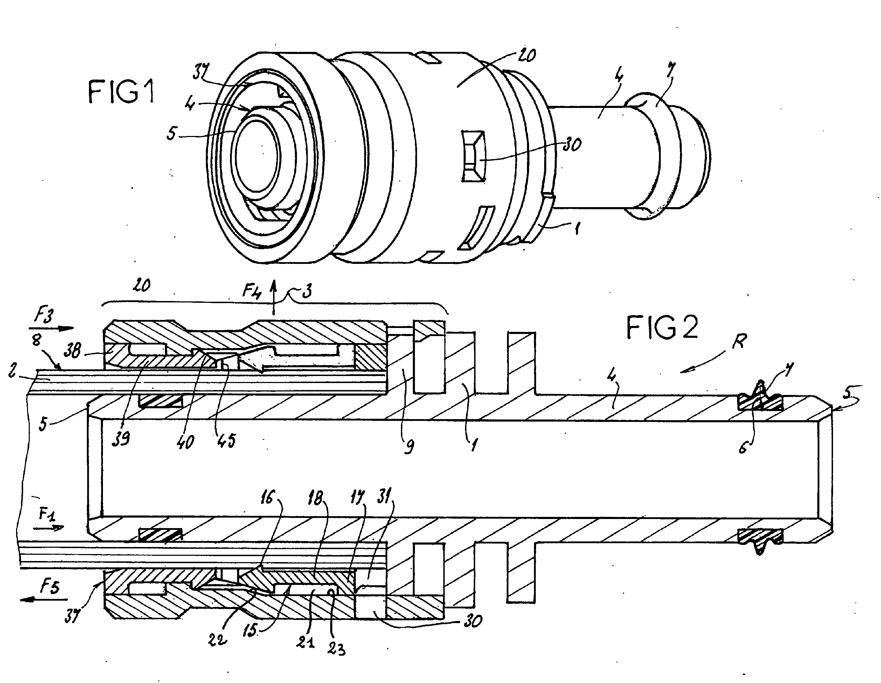

Un raccord instantané conforme à l'invention, tel qu'illustré à la figure 1 et désigné dans son ensemble par la référence R, comprend un corps 1 pourvu, pour chaque tube 2 à raccorder, de moyens de raccordement 3. Le corps 1 du raccord R peut présenter toute forme appropriée à sa fonction comme par exemple une forme en T ou en coude. Le corps 1 peut également constituer un dispositif de distribution tel qu'une "nourrice" auquel sont raccordés, en parallèle, différents tubes.

Les moyens de raccordement 3 comprennent une partie tubulaire mâle 4, qui est solidaire du corps 1 et sur laquelle est destiné à être emmanché le tube 2. A cette fin, la partie tubulaire mâle 4 possède une forme sensiblement cylindrique avec un diamètre extérieur inférieur ou égal au diamètre intérieur du tube à raccorder 2. De manière préférée, la partie mâle 4 possède un diamètre extérieur sensiblement égal, au jeu de montage près, au diamètre intérieur du tube 2.

La partie mâle 4 présente, à distance de son extrémité libre dite d'introduction 5, une gorge périphérique extérieure 6 pour le logement d'un joint d'étanchéité 7 destiné à coopérer avec la face intérieure 8 du tube à raccorder 2. Le joint d'étanchéité 7 peut être réalisé de toute manière appropriée telle que par exemple sous la forme d'un joint torique ou de manière préférée sous la forme d'un joint à une ou plusieurs lèvres.

Afin de limiter l'enfoncement du tube à raccorder 2 sur la partie mâle 4, cette dernière présente, à distance de l'extrémité d'introduction 5 et de la gorge 6, une butée 9 destinée à offrir un appui à l'extrémité 10 du tube à raccorder. La butée 9 peut être réalisée de toute manière appropriée et par exemple constituée par un épaulement de la partie tubulaire mâle 4. Selon l'exemple illustré, la butée 9 est définie par une collerette annulaire périphérique portée par la partie tubulaire 4 ou le corps 1.

Afin d'assurer une immobilisation du tube à raccorder 2 sur la partie tubulaire mâle 4, les moyens de raccordement 3 comprennent une bague d'accrochage 15 dans laquelle le tube à raccorder 2 est destiné à être engagé. Ainsi, la bague 15 présente une section de passage supérieure ou égale à la section extérieure du tube à raccorder 2. La bague d'accrochage 15 présente en outre, au niveau de sa face intérieure et en tant que moyens d'accrochage, au moins une arête d'accrochage 16 destinée à pénétrer en partie au moins dans la face extérieure du tube à raccorder 2. La bague d'accrochage 15 présente alors une faculté de déformation élastique au moins dans la région portant les arêtes 16 de manière à autoriser l'introduction du tube à raccorder 2. En effet, il doit être remarqué que la section de passage de la bague 15 au niveau de l'arête 16 est légèrement inférieure à la section extérieure du tube à raccorder 2.

La bague d'accrochage 15 peut être réalisée de toute façon appropriée de manière à présenter cette capacité de déformation élastique dans le sens d'une augmentation de sa section de passage. Ainsi, la bague d'accrochage 15 est réalisée sous la forme d'une bague fendue en matière plastique ou composite.

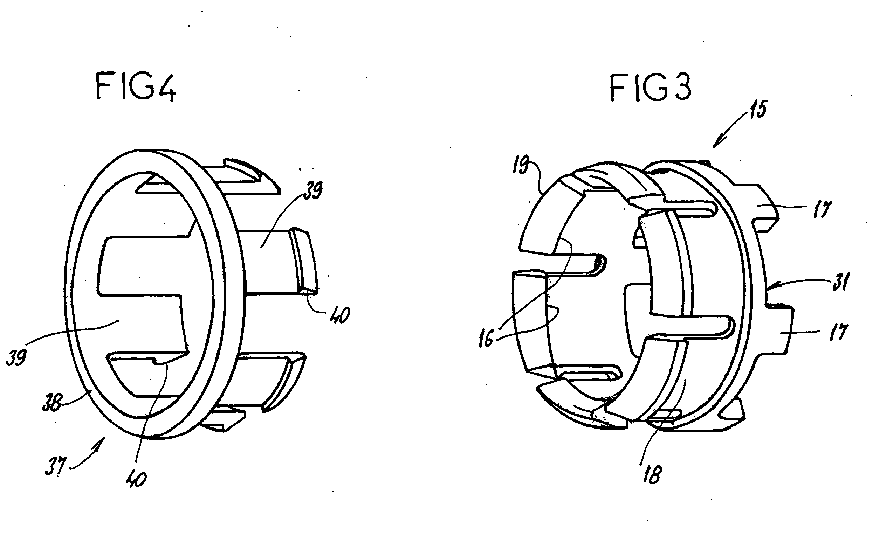

Selon l'exemple illustré et comme le montre plus particulièrement la figure 3, la bague d'accrochage 15 n'est pas solidaire de la partie tubulaire 4 et se trouve réalisée sous la forme d'un élément indépendant. Ainsi, la bague d'accrochage 15 comprend un corps annulaire 17 à partir duquel s'étendent, selon une direction parallèle à l'axe de symétrie de la bague, six dents 18 élastiquement déformables. Chaque dent 18 présente, au voisinage de son extrémité libre 19 opposée au corps annulaire 17, une arête 16 d'accrochage qui peut être réalisée de toute façon appropriée. Ainsi, l'arête 16 peut être constituée par un insert métallique sur lequel la dent 18 est surmoulée ou encore résultée d'une conformation en dent de loup de l'extrémité 19 de la dent 18. La bague d'accrochage 15, telle qu'illustrée à la figure 3, est destinée à être engagée sur la partie tubulaire mâle 4 en étant orientée de manière que l'extrémité 19 des dents 18 soit dirigée vers l'extrémité d'introduction 5.

Afin d'associer la bague d'accrochage 15 à la partie tubulaire 4, les moyens de raccordement 3 comprennent, en outre, une coiffe tubulaire rigide 20 destinée à être adaptée sur la partie tubulaire mâle 4 en laissant subsister un espace suffisant pour l'introduction du tube à raccorder 2. Selon l'exemple illustré aux figures 1 et 2, la coiffe tubulaire est destinée à venir se fixer sur la partie mâle tubulaire au moyen d'un système de crochets engagés sur la collerette 9 de la partie mâle 4.

Conformément à une caractéristique de l'invention, la coiffe tubulaire 20 définit une chambre annulaire 21 dans laquelle la bague d'accrochage 16 se trouve disposée. De manière préférée, la chambre d'accrochage 21 possède une région 22, dite de serrage, qui présente au moins une surface inclinée convergeant vers l'extrémité d'introduction 5. De plus, la chambre d'accrochage 21 présente, dans le prolongement de la surface de serrage 22, une région, dite d'expansion, 23 située à l'opposé de l'extrémité d'introduction 5. La région d'expansion 23 présente alors des dimensions suffisantes pour permettre une augmentation de la section de passage de la bague d'accrochage 15 lors de l'introduction du tube à raccorder 2 comme cela ressortira de la suite.

Le raccord selon l'invention comprend aussi une bague de démontage 37 conformée pour venir agir sur la bague d'accrochage afin de dégager les arêtes d'accrochage 16 hors de la surface extérieure du tube raccordé 2. Selon l'exemple illustré, la bague de démontage 37 possède, comme montré à la figure 4, un corps annulaire de manoeuvre 38 à partir duquel s'étend une série de dents 39 qui présentent une extrémité libre en forme de coin 40 destinée à venir s'engager dans la bague d'accrochage 15, au niveau des extrémités 19 des dents 18 pour écarter ces dernières dans le sens d'une augmentation de la section de passage de la bague au niveau des arêtes d'accrochage 16. Bien entendu, la bague de démontage 37 possède une section de passage intérieure, supérieure ou égale à la section extérieure du tube 2.

Les différents éléments constitutifs du raccord instantané R, selon l'invention, sont de préférence mais non exclusivement fabriqués de manière indépendante en matière plastique injectée.

Après fabrication du corps 1 portant la partie tubulaire mâle 4, de la bague d'accrochage 15 et de la coiffe 20, la bague 15 est engagée sur la partie tubulaire 4 mâle, les dents 18 de la bague étant orientées vers l'extrémité d'introduction 5. Ensuite, la coiffe 20 est fixée sur la partie tubulaire mâle 4 de manière à emprisonner la bague d'accrochage 15 dans la chambre d'accrochage 21.

Après cet assemblage du raccord instantané R, le raccordement du tube 2 s'effectue de la manière suivante.

Le tube 2 est emmanché sur la partie tubulaire mâle 4 en étant introduit entre cette dernière et la coiffe 20. Le tube 2 est alors poussé dans le sens de la flèche F1 jusqu'à venir en appui sur la butée 9 par son extrémité 10. Lors de l'introduction du tube à raccorder 2, ce dernier vient s'engager dans la bague d'accrochage 15 dont la capacité de déformation élastique est mise à profit pour autoriser un écartement des arêtes d'accrochage 16 et permettre la progression du tube 2. Afin de favoriser la mise en place du tube, l'extrémité de la bague d'accroche, orientée vers l'extrémité d'introduction 5, possède, de manière préférée, une forme tronconique convergeant à l'opposé de l'extrémité d'introduction 5. Cette forme tronconique favorise alors l'écartement des dents 18 lors de l'introduction du tube 2. Il doit être noté que pendant la progression du tube 2, le recul de la bague 15 est limité par la butée 9.

Afin de permettre une vérification de l'introduction complète du tube 2, la coiffe 20 présente, de manière préférée, au moins une, et de préférence, plusieurs fenêtres 30 destinées à permettre de constater que l'extrémité 10 du tube 2 est en appui sur la butée 9. Il doit être noté que, pour permettre ce contrôle, le corps annulaire 17 de la bague d'accrochage 15 présente également au moins une et, de préférence, plusieurs fenêtres 31 réparties sur sa périphérie.

Lorsque le tube 2 est complètement engagé, les arêtes d'accrochage 16 pénètrent alors dans sa surface extérieure liant ainsi le tube à la bague d'accrochage 15. En cas d'un mouvement intempestif du tube 2 dans le sens d'un retrait, la bague 15, accrochée au tube 2 par les arêtes 16, se trouve déplacée avec ce dernier vers la zone de serrage 22 de la chambre d'accrochage 21. Ainsi, la pénétration des arêtes d'accrochage 16 se trouve accentuée et le tube 2 est, par ailleurs, serré fortement par la bague d'accrochage 15 sous un effet de coin résultant du déplacement de l'extrémité de la bague 15 sur la surface d'appui convergente 22 de la chambre d'accrochage 21. Cet effet de coin empêche alors tout déplacement supplémentaire du tube qui est parfaitement immobilisé.

Afin de favoriser cet effet de coin, la surface extérieure de l'extrémité de la bague d'accrochage 15, orientée vers l'extrémité d'introduction 5, possède, de manière préférée, une forme complémentaire à celle de la surface d'appui 22 et, selon l'exemple illustré, une forme sensiblement tronconique convergente vers l'extrémité d'introduction 5.

De manière préférée, la bague de démontage 37 est montée à demeure dans la coiffe 20 et son corps de manoeuvre 38 est accessible depuis l'extrémité de la coiffe 20 située au niveau de l'extrémité d'introduction 5 de la partie tubulaire 4 de manière à pouvoir être déplacée en translation axiale vers la bague d'accrochage 15. Ainsi, un déplacement de la bague de démontage 37, par une pression dans le sens de la flèche F3 sur le corps de manoeuvre 38, permet d'obtenir un écartement des dents 18 de la bague d'accrochage 15 dans le sens de la flèche F4, ce qui entraîne un décrochage des arêtes 16 et autorise un retrait du tube 2 dans le sens de la flèche F5.

Ainsi, la mise en oeuvre de la bague de démontage 37 permet d'assurer un retrait du tube 2 sans avoir à procéder à un démontage de la coiffe 20.

De manière préférée, afin d'éviter un désengagement intempestif du tube, la coiffe 20 présente, dans la chambre d'accrochage 21, des moyens, tels que par exemple au moins une butée 45, pour limiter la course de la bague d'accrochage 15 vers l'extrémité d'introduction 5 dans le sens de la flèche F5. La butée 45 empêche ainsi que la bague d'accrochage 15 puisse coopérer avec la bague de démontage 37 et donc se détacher du tube 2 lors d'un mouvement intempestif du tube 2 dans le sens F5 d'un retrait. Bien entendu, la butée 45 est positionnée de façon à ne pas faire obstacle à un serrage optimal du tube 2.

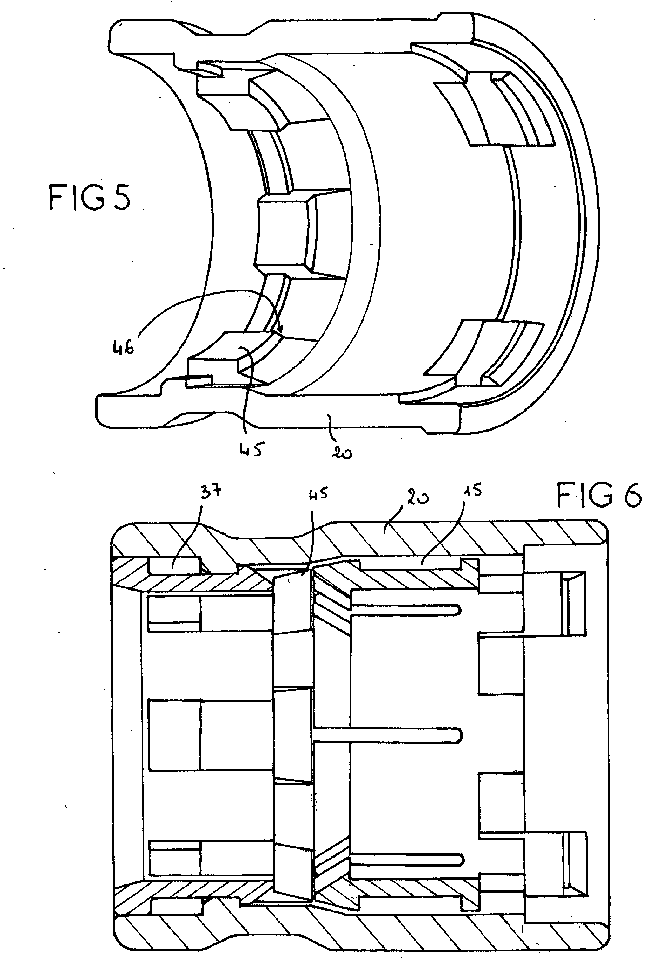

La butée 45 est, comme montré aux figures 5 et 6, constituée par une nervure annulaire ménagée sur la face intérieure de la coiffe tubulaire 20 et comportant des évidements 46 destinées au passage des dents axiales 39 de la bague de démontage 37.

## Revendications

1. Raccord instantané pour tubes déformables (2), tels que des tubes en composite comprenant une âme métallique, par exemple en aluminium, revêtue de couches en matière synthétique, par exemple de polyéthylène réticulé, comprenant un corps rigide (1) pourvu, pour le raccordement de chaque tube, de moyens de raccordement (3) comprenant :
- une partie tubulaire (4) sur laquelle le tube à raccorder est destiné à être emmanché à partir d'une extrémité d'introduction (5) de la partie tubulaire et qui présente une gorge périphérique extérieure (6) pour le logement d'un joint (7) destiné à coopérer avec la face interne (8) du tube pour assurer l'étanchéité du raccordement,
- une bague d'accrochage (15), mobile axialement, dans laquelle le tube à raccorder est destiné à être engagé, qui présente sur sa face intérieure au moins une arête saillante d'accrochage (16) destinée à coopérer avec la face extérieure du tube et qui possède, au moins dans la région portant les moyens d'accrochage, une capacité de déformation élastique au moins dans le sens d'une augmentation de la section de passage de la bague,
- une coiffe tubulaire rigide (20) fixée à la partie tubulaire (4) délimitant une chambre annulaire (21), dite d'accrochage, à l'intérieur de laquelle est située la bague d'accrochage,
**caractérisé en ce qu**'il comprend une bague de démontage (37) mobile en translation axiale montée à demeure dans la coiffe et accessible, à partir de l'extrémité de la coiffe située du côté de l'extrémité d'introduction de la partie tubulaire pour être déplacée depuis une position de montage dans laquelle est située la bague de démontage, à distance de la bague d'accrochage, vers une position de démontage dans laquelle la bague de démontage agit sur la bague d'accrochage.

2. Raccord instantané selon la revendication 1, **caractérisé en ce que** la bague d'accrochage (15) possède, à son extrémité orientée vers l'extrémité d'introduction (5) de la partie tubulaire (4), au moins une surface dite de démontage convergeant à l'opposé de l'extrémité d'introduction et destinée à coopérer avec la bague de démontage (37).

3. Raccord instantané selon l'une quelconque des revendications 1 ou 2, **caractérisé en ce que**, dans la chambre d'accrochage (21), des moyens (45) sont prévus pour limiter la course de la bague d'accrochage (15) et empêcher une coopération intempestive de la bague d'accrochage avec la bague de démontage (37).

4. Raccord instantané selon l'une quelconque des revendications 1 à 3, **caractérisé en ce que** la bague d'accrochage (15) comprends un corps annulaire (17) à partir duquel s'étendent, selon une direction axiale vers l'extrémité d'introduction (5) de la partie tubulaire (4), au moins deux dents (18) élastiquement déformables comprenant chacune, sur leur face intérieure, un moyen d'accrochage constitué par une arête d'accrochage (16).

5. Raccord instantané selon la revendication 4, **caractérisé en ce que** la bague de démontage (37) comprend un corps annulaire de manoeuvre (38) à partir duquel s'étendent une série de dents axiales (39) présentant chacune une extrémité en forme de coin (40) destinées à venir s'engager dans la bague d'accrochage (15) au niveau des extrémités (19) des dents (18) pour écarter ces dernières dans le sens d'une augmentation de la section de passage de la bague au niveau des arêtes d'accrochage (16).

6. Raccord instantané selon l'ensemble des revendications 3 à 5, **caractérisé en ce que** les moyens de limitation de la course de la bague d'accrochage sont constitués par une nervure annulaire (45) ménagée sur la face intérieure de la coiffe tubulaire (20), et comportant des évidements (46) destinés au passage des dents axiales (39) de la bague de démontage (37).

7. Raccord instantané selon l'une quelconque des revendications 1 à 6, **caractérisé en ce que** la bague d'accrochage (15) est mobile en translation axiale par rapport à la chambre d'accrochage (21), et **en ce que** la chambre d'accrochage possède au moins une région dite de serrage (22), convergeant vers l'extrémité d'introduction (5) de la partie tubulaire (4) et destinée à exercer, sur la région de la bague d'accrochage portant les moyens d'accrochage (16), un effort dans le sens d'un serrage du tube à raccorder (2), la bague d'accrochage (15) possédant au moins une surface d'appui complémentaire de celle de la région de serrage (22) de la coiffe (20).

8. Raccord instantané selon la revendication 7, **caractérisé en ce que** la chambre d'accrochage (21) possède, dans le prolongement de la région de serrage (22) et à l'opposé de l'extrémité d'introduction (5) de la partie tubulaire (4), une région d'expansion (23) dans laquelle la bague d'accrochage (15) est susceptible de se déformer élastiquement pour présenter au moins, au niveau des moyens d'accrochage (16), une section de passage supérieure ou égale à la section extérieure du tube à raccorder (2).

9. Raccord instantané selon l'une des revendications 1 à 8, **caractérisé en ce que** les moyens de raccordement (3) comprennent des moyens pour contrôler le montage correct du tube à raccorder (2).

10. Raccord instantané selon la revendication 9, **caractérisé en ce que** les moyens de contrôle comprennent au moins une fenêtre (30) aménagée dans la coiffe (20) à distance de l'extrémité de la coiffe située vers l'extrémité d'introduction (5) de la partie tubulaire (4).

11. Raccord instantané selon l'une des revendications 1 à 10, **caractérisé en ce que** les moyens de raccordement (3) comprennent, à distance de l'extrémité d'introduction (5) de la partie tubulaire (4), une butée (9) destinée à offrir un appui à l'extrémité du tube à raccorder (2).

## Claims

1. Fast-action coupling for deformable pipes (2), such as composite pipes comprising a metal core, for example, of aluminium, covered with layers of synthetic material, for example, of crosslinked polyethylene, the coupling comprising a rigid body (1) provided, for coupling each pipe, with coupling means (3) comprising:
- a tubular part (4) on to which the pipe to be coupled is designed to be pushed, starting from an insertion end (5) of the tubular part, which has an external peripheral groove (6) for receiving a seal (7) designed to cooperate with the internal face (8) of the pipe to ensure fluid-tightness of the coupling,
- an axially movable locking ring (15) in which the pipe to be coupled is designed to engage and which has on its internal face at least one projecting locking edge (16) designed to cooperate with the external face of the pipe and which has, at least in the region which carries the locking means, a capacity for elastic deformation at least in the direction of increasing the opening cross section of the ring,
- a rigid tubular cap (20) fixed to the tubular part (4) and delimiting an annular chamber (21), called the locking chamber, inside which the locking ring is located,
**characterised in that** it includes a disassembly ring (37) which is movable in axial translation, is permanently mounted in the cap and is accessible from the end of the cap located on the side of the insertion end of the tubular part in order to be moved from an assembly position, in which the disassembly ring is located at a distance from the locking ring, to a disassembly position, in which the disassembly ring acts on the locking ring.

2. Fast-action coupling according to Claim 1,
**characterised in that** the locking ring (15) has at its end oriented towards the insertion end (5) of the tubular part (4) at least one surface, called the disassembly surface, tapering away from the insertion end and designed to cooperate with the disassembly ring (37).

3. Fast-action coupling according to either of Claims 1 and 2, **characterised in that** there are provided in the locking chamber (21) means for limiting the travel of the locking ring (15) and for preventing untimely cooperation of the locking ring with the disassembly ring (37)

4. Fast-action coupling according to any one of Claims 1 to 3, **characterised in that** the locking ring (15) includes an annular body (17) from which extend, in an axial direction towards the insertion end (5) of the tubular part (4), at least two elastically deformable teeth (18), each of which includes on its internal face a locking means formed by a locking edge (16).

5. Fast-action coupling according to Claim 4,
**characterised in that** the disassembly ring (37) includes an annular actuating body (38) from which extend a series of axial teeth (39) each of which has an end in the form of a wedge (40) designed to engage in the locking ring (15) level with the ends (19) of the teeth (18) in order to spread the latter in the direction of increasing the opening cross section of the ring in the region of the locking edges (16).

6. Fast-action coupling according to Claims 3 to 5 together, **characterised in that** the means for limiting the travel of the locking ring are formed by an annular rib (45) formed on the internal face of the tubular cap (20) and having recesses (46) designed to allow the axial teeth (39) of the disassembly ring (37) to pass through.

7. Fast-action coupling according to any one of Claims 1 to 6, **characterised in that** the locking ring (15) is movable in axial translation with respect to the locking chamber (21), and **in that** the locking chamber includes at least one region, called the pinching region (22), tapering towards the insertion end (5) of the tubular part (4) and designed to exert a force, in the direction of pinching the pipe to be coupled (2), in the region of the locking ring which carries the locking means (16), the locking ring (15) having at least one abutment surface complementary to that of the pinching region (22) of the cap (20).

8. Fast-action coupling according to Claim 7,
**characterised in that** the locking chamber (21) has, in the prolongation of the pinching region (22) and located away from the insertion end (5) of the tubular part (4), an expansion region (23) in which the locking ring (15) is able to be deformed elastically in order to present, at least in the region of the locking means (16), an opening cross section greater than or equal to the external cross section of the pipe to be coupled (2).

9. Fast-action coupling according to any one of Claims 1 to 8, **characterised in that** the coupling means (3) include means for verifying the correct assembly of the pipe to be coupled (2).

10. Fast-action coupling according to Claim 9,
**characterised in that** the monitoring means include at least one window (30) formed in the cap (20) at a distance from the end of the cap located towards the insertion end (5) of the tubular part (4).

11. Fast-action coupling according to any one of Claims 1 to 10, **characterised in that** the coupling means (3) include, at a distance from the insertion end (5) of the tubular part (4), a stop (9) designed to provide an abutment for the end of the pipe to be coupled (2).

## Patentansprüche

1. Schnellkupplung für verformbare Rohre (2), wie etwa Rohre aus Verbundmaterial mit einem metallischen Kern, z.B. aus Aluminium, der mit Schichten aus synthetischem Material wie z.B. vernetztem Polyethylen bedeckt ist, wobei die Schnellkupplung einen starren Körper (1) aufweist, der für das Anschließen jedes Rohres mit Verbindungseinrichtungen (3) versehen ist, welche aufweisen:
- ein rohrförmiges Teil (4), das zum Aufschieben des anzuschließenden Rohres ausgehend von einem Einführende (5) des rohrförmigen Teils bestimmt ist, und das eine äussere Umfangsnut (6) für die Aufnahme einer Dichtung (7) aufweist, die dazu bestimmt ist, mit der Innenseite (8) des Rohres zusammenzuwirken, um die Dichtigkeit der Verbindung zu bewirken,
- einen in Axialrichtung verschiebbaren Einhakring (15), der für einen Eingriff des anzuschließenden Rohres darin bestimmt ist und auf seiner Innenseite mindestens eine vorspringende Einhakkante (16) aufweist, die dazu bestimmt ist, mit der Aussenseite des Rohres zusammenzuwirken, und der zumindest in dem die Einhakeinrichtungen tragenden Bereich die Fähigkeit zu einer elastischen Verformung zumindest im Sinne einer Vergrößerung des Durchgangsquerschnittes des Ringes besitzt,
- eine an dem rohrförmigen Teil (4) befestigte, starre rohrförmige Kappe (20), die eine als Einhakkammer bezeichnete, ringförmige Kammer (21) begrenzt, in deren Innerem sich der Einhakring befindet,
**dadurch gekennzeichnet,**
**dass** sie einen in Axialrichtung translatorisch verschiebbaren Demontagering (37) aufweist, der dauerhaft im Inneren der Kappe montiert ist und von dem auf der Seite des Einführendes des rohrförmigen Teils befindlichen Ende der Kappe her zugänglich ist, um aus einer Montageposition, in der sich der Demontagering in einem Abstand von dem Einhakring befindet, auf eine Demontageposition hin verschoben zu werden, in der der Demontagering auf den Einhakring einwirkt.

2. Schnellkupplung nach Anspruch 1,
**dadurch gekennzeichnet,**
**dass** der Einhakring (15) an seinem auf das Einführende (5) des rohrförmigen Teils (4) hin gerichteten Ende mindestens eine so genannte Demontagefläche aufweist, die entgegengesetzt zum Einführende konvergiert und dazu bestimmt ist, mit dem Demontagering (37) zusammenzuwirken.

3. Schnellkupplung nach einem der Ansprüche 1 oder 2,
**dadurch gekennzeichnet,**
**dass** in der Einhakkammer (21) Einrichtungen (45) zum Begrenzen einer Bewegung des Einhakringes (15) und zum Verhindern eines unbeabsichtigten Zusammenwirkens des Einhakringes mit dem Demontagering (37) vorgesehen sind.

4. Schnellkupplung nach einem der Ansprüche 1 bis 3,
**dadurch gekennzeichnet,**
**dass** der Einhakring (15) einen ringförmigen Körper (17) aufweist, von dem aus sich in einer axialen Richtung auf das Einführende (5) des rohrförmigen Teils (4) hin mindestens zwei elastisch verformbare Zähne (18) erstrecken, die jeweils auf ihrer Innenseite eine aus einer Einhakkante (16) bestehende Einhakeinrichtung aufweisen.

5. Schnellkupplung nach Anspruch 4,
**dadurch gekennzeichnet,**
**dass** der Demontagering (37) einen ringförmigen Betätigungskörper (38) aufweist, von dem aus sich eine Reihe von axialen Zähnen (39) erstreckt, die jeweils ein keilförmiges Ende (40) aufweisen, das dazu bestimmt ist, an den Enden (19) der Zähne (18) in den Einhakring (15) einzugreifen, um diese auf Höhe der Einhakkanten (16) im Sinne einer Vergrößerung des Durchgangsquerschnittes des Ringes wegzudrücken.

6. Schnellkupplung nach der Gesamtheit der Ansprüche 3 bis 5,
**dadurch gekennzeichnet,**
**dass** die Einrichtungen zum Begrenzen einer Bewegung des Einhakringes aus einer auf der Innenseite der rohrförmigen Kappe (20) ausgebildeten, ringförmigen Rippe (45) bestehen und Aussparungen (46) aufweisen, die für den Durchtritt der axialen Zähne (39) des Demontageringes (37) bestimmt sind.

7. Schnellkupplung nach einem der Ansprüche 1 bis 6,
**dadurch gekennzeichnet,**
**dass** der Einhakring (15) in Axialrichtung in Bezug auf die Einhakkammer (21) translatorisch verschiebbar ist, sowie
**dadurch**, dass die Einhakkammer mindestens einen so genannten Einspannbereich (22) aufweist, der auf das Einführende (5) des rohrförmigen Teils (4) hin konvergiert und dazu bestimmt ist, auf den die Einhakeinrichtungen (16) tragenden Bereich des Einhakringes eine Kraft im Sinne eines Einspannens des anzuschließenden Rohres (2) auszuüben, wobei der Einhakring (15) mindestens eine Abstützfläche aufweist, die zu derjenigen des Einspannbereichs (22) der Kappe (20) komplementär ist.

8. Schnellkupplung nach Anspruch 7,
**dadurch gekennzeichnet,**
**dass** die Einhakkammer (21) in der Verlängerung des Einspannbereichs (22) und gegenüber von dem Einführende (5) des rohrförmigen Teils (4) einen Aufweitungsbereich (23) aufweist, in dem sich der Einhakring (15) elastisch verformen kann, so dass er zumindest auf Höhe der Einhakeinrichtungen (16) einen Durchgangsquerschnitt aufweist, der größer als oder gleich dem äusseren Querschnitt des anzuschließenden Rohres (2) ist.

9. Schnellkupplung nach einem der Ansprüche 1 bis 8,
**dadurch gekennzeichnet,**
**dass** die Verbindungseinrichtungen (3) Einrichtungen zum Kontrollieren der ordnungsgemäßen Montage des anzuschließenden Rohres (2) aufweisen.

10. Schnellkupplung nach Anspruch 9,
**dadurch gekennzeichnet,**
**dass** die Kontrolleinrichtungen mindestens ein Fenster (30) umfassen, das in der Kappe (20) in einem Abstand von dem zum Einführende (5) des rohrförmigen Teils (4) hin befindlichen Ende der Kappe ausgebildet ist.

11. Schnellkupplung nach einem der Ansprüche 1 bis 10,
**dadurch gekennzeichnet,**
**dass** die Verbindungseinrichtungen (3) in einem Abstand vom Einführende (5) des rohrförmigen Teils (4) einen Anschlag (9) aufweisen, der dazu bestimmt ist, dass sich das Ende des anzuschließenden Rohres (2) an ihm abstützen kann.
